# FASCICULE DE BREVET EUROPEEN

(11) **EP 2 367 649 B1**
(45) Date de publication et mention de la délivrance du brevet: **02.01.2013**
(21) Numéro de dépôt: 09763843.1
(22) Date de dépôt: 19.11.2009
(51) Int. Cl.: B22D 11/106, B22D 41/56, B22D 41/50

(54) **TETE DE SUPPORT POUR LA MANIPULATION D'UN TUBE DE POCHE**
LAGERKOPF ZUR HANDHABUNG EINES GIESSPFANNENROHRS
BEARING HEAD FOR HANDLING A LADLE PIPE

(30) Priorité: 20.11.2008 EP 08169501
(43) Date de publication de la demande: 28.09.2011
(73) Titulaire: Vesuvius Group S.A, 7011 Ghlin (BE)
(72) Inventeur: DELSINE, Damien, B-7370 Dour (BE)
(74) Mandataire: Debled, Thierry
(86) Numéro de dépôt international: PCT/EP2009/008255
(87) Numéro de publication internationale: WO 2010/057646

(56) Documents cités:
- GB-A- 2 171 348
- JP-A- 7 164 117
- JP-A- 9 108 825
- KR-A- 20040 021 971
- US-A- 4 316 561
- US-A- 4 593 838

## Description

La présente invention concerne une installation de coulée, notamment un dispositif pour introduire un tube de poche dans une telle installation.

Un tube de poche est un tube comprenant un canal s'étendant selon un axe, vertical lorsque le tube est en position d'utilisation, le canal permettant le passage d'un métal liquide provenant d'un récipient métallurgique, tel qu'une poche, jusqu'à un répartiteur. Lorsqu'il est dans sa position d'utilisation, le tube comprend une extrémité supérieure en contact avec un élément amont de l'installation, solidaire de la poche, et une extrémité inférieure immergée dans un répartiteur.

On connaît dans l'état de la technique un dispositif de manipulation d'un tube de poche comprenant un bras manipulateur déplacé manuellement par un opérateur, le bras comprenant à une extrémité une pince apte à être placée autour du tube et à enserrer celui-ci, la pince venant saisir le tube pour le déplacer et l'introduire dans l'installation de coulée. Dans l'état de la technique le tube est saisi par le bras manipulateur, de sorte qu'il est placé avec une orientation angulaire totalement aléatoire relativement à ce bras à moins que l'opérateur ne présente le tube au bras manipulateur selon une orientation particulière.

Un tel dispositif permet d'introduire le tube dans l'installation de coulée de façon satisfaisante. Toutefois, un tel dispositif n'est pas optimal lorsqu'il s'agit de diminuer les coûts relatifs à la coulée.

Pour ce faire, l'invention a pour objet une tête de support apte à supporter un tube de poche pour coulée de métal liquide comprenant un canal pour le passage du métal s'étendant essentiellement selon un axe, la tête de support étant prévue pour un dispositif de manipulation du tube et comprenant des moyens de contrôle de l'orientation angulaire du tube par rapport à la tête, selon un axe correspondant à l'axe du canal.

Ainsi, l'orientation du tube vis-à-vis d'un dispositif de manipulation comprenant la tête de support peut être facilement déterminée. De ce fait, comme le dispositif effectue un mouvement similaire à chaque étape d'introduction du tube dans l'installation de coulée, on peut également déterminer l'orientation dans laquelle le tube est introduit relativement à l'installation de coulée, notamment relativement à l'élément amont de l'installation. Grâce à une telle tête de support, il est donc possible d'orienter le tube de la façon souhaitée par rapport à l'installation de coulée.

Cela est particulièrement avantageux car cela permet de munir le tube d'ouïes ou de conduits de sortie qui auront donc une orientation déterminée et permettront d'orienter le flux et d'augmenter par conséquent l'efficacité de la coulée.

En outre, dans le cas où le tube peut être saisi selon plusieurs orientations par le dispositif de manipulation comprenant la tête de support, cette dernière permet d'introduire le même tube selon plusieurs orientations dans l'installation de coulée. Cela permet également de répartir l'usure de la paroi interne du tube, car le flux s'écoulant de la poche est en général légèrement orienté et certaines portions de parois s'usent de ce fait plus vite que le reste de celle-ci. De même, lorsque le tube est introduit par coulissement dans l'installation de coulée, cela permet d'uniformiser l'usure de la surface de contact coulissant contre un élément amont de l'installation, certaines zones ayant une position prédéterminée relativement à l'élément amont de l'installation s'usent plus rapidement que le reste de la surface. La durée de vie du tube est donc allongée et on peut utiliser un même tube un plus grand nombre de fois sans risquer une défaillance prématurée du tube de poche.

Ces différents effets obtenus grâce à l'orientation du tube dans la tête de support permettent d'améliorer la rentabilité de la coulée.

L'invention comprend également l'une ou plusieurs des caractéristiques de la liste suivante :
- la tête comprend deux bras sur lesquels sont agencés les moyens de contrôle,
- en particulier, la tête est conformée pour que les deux bras confèrent à celle-ci une unique configuration ou pour que les bras de celle-ci forment les bras articulés d'une pince et soient aptes à conférer à la tête une pluralité de configurations. Lorsque les bras confèrent à la tête une unique configuration, ils ne sont pas mobiles l'un par rapport à l'autre. Dans ce cas, le dispositif de manipulation est simple puisque la tête est en une seule pièce et que les moyens de déplacement de celle-ci sont moins complexes, car prévoir un mouvement de fermeture des bras n'est pas nécessaire. Lorsque les bras forment une pince, ils sont aptes à enserrer le tube, ce qui permet d'éviter les jeux entre les moyens de contrôle de la tête et le tube lors du déplacement du tube et de garantir ainsi un déplacement et une introduction encore plus fiable du tube dans l'installation;
- les moyens de contrôle forment également des moyens de retenue du tube sur la tête. Le tube peut donc être retenu sur la tête sans utiliser une pince qui, du fait du serrage du tube est susceptible d'endommager le tube. Ce mode de réalisation permet de diminuer les risques d'endommagement du tube lors de son déplacement et de son introduction dans l'installation ;
- les moyens de contrôle comprennent au moins une encoche conformée pour s'étendre selon l'axe du tube lorsque celui-ci est rapporté sur la tête, l'encoche étant apte à coopérer avec un relief du tube et présentant, selon la direction correspondant à l'axe du tube, une extrémité d'entrée évasée. Ainsi, la coopération entre la tête et le tube est une coopération de forme. En outre, du fait de l'entrée évasée de l'encoche, qui permet le guidage du tube jusque dans l'encoche, il est plus facile d'ajuster la position sur la tête du relief du tube. Ceci est d'autant plus avantageux lorsque la tête de support est amenée sur le tube par un dispositif automatisé effectuant des mouvements prédéterminés ;
- la tête de support comprend une surface de butée de forme complémentaire d'une surface de retour du tube, agencée pour entrer en butée contre cette surface de retour. Dans le cas où cette surface est une combinaison avec des encoches, ces encoches de la tête bloquent les degrés de liberté du tube en rotation et en translation selon tous les axes sauf en translation verticale. La surface de la tête, notamment constituée par la surface supérieure, en butée avec la surface de retour du tube, bloque la translation verticale du tube vers le bas, la gravité empêchant la translation verticale du tube vers le haut. Le tube est donc entièrement retenu grâce aux moyens de contrôle de l'orientation angulaire et à la surface supérieure de la tête de support.

L'invention a également pour objet un dispositif de manipulation d'un tube de poche pour coulée de métal liquide, le dispositif comprenant une tête de support selon l'invention et des moyens de déplacement de la tête, ainsi que des moyens d'entraînement des moyens de déplacement et, de préférence, des moyens de commande des moyens d'entraînement.

Ainsi, l'introduction du tube dans l'installation de coulée peut être effectuée de façon automatique, ce qui évite les difficultés de manipulation du bras par l'opérateur et les accidents dus à une erreur humaine. En outre, le temps d'introduction du tube de poche dans l'installation peut être diminué.

L'invention a également pour objet un tube de poche pour coulée de métal liquide comprenant un canal pour le passage du métal s'étendant essentiellement selon un axe, caractérisé en ce qu'il comprend des moyens de contrôle de l'orientation angulaire du tube par rapport à une tête de support selon l'invention, selon un axe correspondant à l'axe du canal, ces moyens étant aptes à coopérer avec les moyens complémentaires de la tête.

Les moyens du tube peuvent également comprendre un relief s'étendant essentiellement selon l'axe du canal et ayant une section transversale invariante relativement à cette direction, ce relief étant apte à coopérer avec une encoche de la tête telle que définie auparavant.

Le tube peut également comprendre une surface de retour, de préférence tournée vers une extrémité inférieure du tube lorsque celui-ci est en une position d'utilisation, dans laquelle l'axe du canal est vertical, cette surface étant apte à entrer en butée avec une surface de forme complémentaire de la tête de support selon un mode de réalisation de l'invention.

En outre, les moyens de contrôle du tube peuvent comprendre au moins trois éléments de contrôle. Cela peut notamment permettre d'orienter le tube selon plusieurs orientations relativement à la tête de support. L'usure de la paroi interne et d'une surface supérieure de celui-ci en contact avec un élément amont de l'installation peut donc être mieux répartie, comme expliqué plus haut.

L'invention a également pour objet un ensemble d'un dispositif de manipulation selon l'invention et d'un tube de poche selon l'invention.

L'invention a également pour objet un procédé de préhension d'un tube de poche selon l'invention comprenant les étapes suivantes :
- on approche une tête de support selon l'invention d'une portion du tube située sous le niveau des moyens de contrôle du tube lorsque celui-ci est dans la position d'utilisation, de sorte que le tube est introduit dans l'espace défini entre les bras de la tête,
- on déplace la tête vers le haut de sorte que les moyens de contrôle de l'orientation angulaire du tube coopèrent avec ceux de la tête, de préférence jusqu'à ce que la surface de la tête soit en butée contre la surface de retour du tube,
- de façon optionnelle, lorsque les bras de la tête forment les bras articulés d'une pince, ceux-ci ayant été approchés du tube avec la pince en configuration ouverte, on ferme la pince.

L'invention a également pour objet un procédé de mise en place d'un tube de poche selon l'invention dans une installation de coulée à l'aide d'un dispositif de manipulation selon l'invention, comprenant les étapes suivantes :
- on effectue les étapes du procédé de préhension selon l'invention, et
- on déplace la tête de support pour introduire le tube dans installation de coulée.

L'invention sera mieux comprise à la lecture de la description qui va suivre, donnée uniquement à titre d'exemple et faite en se référant aux dessins dans lesquels :
- la figure 1 est une vue schématique de côté d'un ensemble d'un dispositif de manipulation selon un mode de réalisation de l'invention et d'un tube selon un mode de réalisation, stocké dans sa position d'utilisation,
- la figure 2 est une vue en perspective d'une tête de support du dispositif de manipulation de la figure 1,
- la figure 3 est une vue en perspective du tube de la figure 1, notamment d'une extrémité supérieure de celul-ci lorsqu'il est dans sa position d'utilisation,
- la figure 4 représente une vue en perspective du dispositif de stockage de tubes comprenant des tubes selon la figure 3 et de la tête de support de la figure 2,
- la figure 5 est une vue en coupe selon un plan vertical d'un tube et d'une tête de support selon la figure 1, lorsque le tube et la tête de support viennent coopérer.

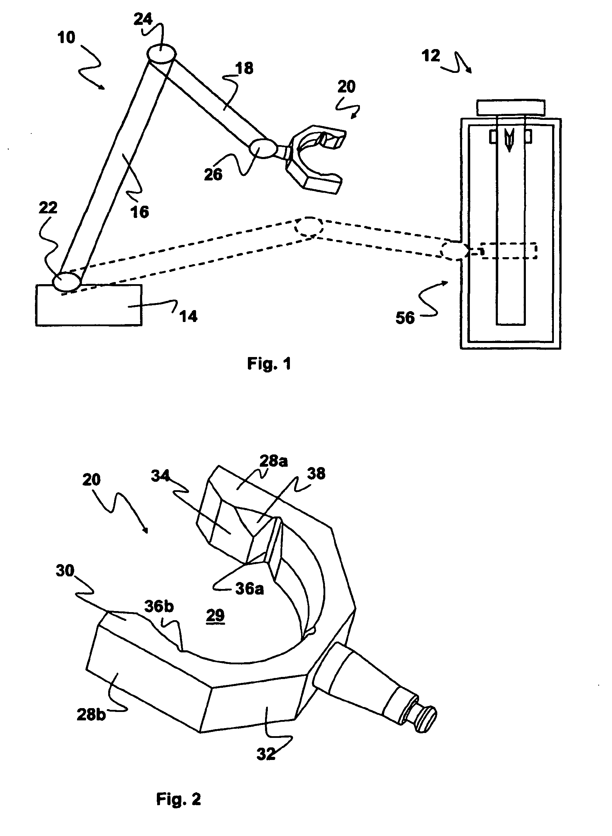

On a représenté sur la figure 1 un ensemble d'un dispositif de manipulation 10 et d'un tube de poche pour coulée de métal liquide 12. Le tube 12 comprend un canal pour le passage du métal, s'étendant essentiellement selon un axe, vertical lorsque le tube 12 est en position d'utilisation, une telle position étant représentée à la figure 1. Le tube est en attente dans un dispositif de stockage 56.

Le dispositif de manipulation comprend un socle 14, un premier bras de déplacement 16 et un deuxième bras de déplacement 18 disposé à l'extrémité du premier bras 16. Une tête de support 20 est mise en place sur le dispositif 10 à l'extrémité du deuxième bras de déplacement 18.

Le dispositif de manipulation 10 comprend des moyens de liaison 22, 24, 26, permettant respectivement de relier le socle 14 au premier bras de déplacement 18, le premier bras de déplacement 16 au deuxième bras de déplacement 18, et le deuxième bras de déplacement 18 à la tête de support 20. Les moyens de liaisons 22, 24, 26 sont constitués par des liaisons rotules qui permettent à chaque élément mobile (respectivement le premier bras 16, le deuxième bras 18 et la tête de support 20) d'effectuer une rotation selon n'importe quel axe par rapport à l'élément de référence (respectivement le socle 14, le premier bras 16 et le deuxième bras 18).

Ainsi, les deux bras 16 et 18 et les moyens de liaison 22, 24, 26 forment des moyens de déplacement de la tête de support 20. Le dispositif comprend également des moyens d'entraînement des moyens de déplacement (non représentés sur la figure), constitués par exemple par un moteur, et des moyens de commande des moyens de déplacement permettant à un opérateur de commander les mouvements du bras 16 relativement au socle, du bras 18 relativement au bras 16 et de la tête de support 20 relativement au bras 18. Les bras 16, 18 et la tête de support 20 sont commandés pour que la tête de support reste toujours essentiellement horizontale.

On va maintenant décrire plus en détail la tête de support 20, notamment en référence à la figure 2.

Comme on le voit sur cette figure, la tête de support est en forme de fourche et comprend notamment deux bras latéraux 28a, 28b essentiellement parallèles. Les deux bras 28a, 28b ne sont pas mobiles l'un par rapport à l'autre et sont donc aptes à conférer à la tête une unique orientation. Entre ces deux bras 28a, 28b est défini un espace 29, dimensionné pour accueillir un tube de poche, tel que le tube 12.

Chaque bras 28a, 28b possède une section essentiellement parallélépipédique et comprend notamment une surface supérieure 30 horizontale, et des surfaces externe 32 et interne 34 verticales.

La tête de support 20 comprend deux encoches 36a, 36b, chaque encoche étant ménagée sur la surface interne 34 d'un bras 28a, 28b distinct. Les encoches s'étendent essentiellement selon une direction perpendiculaire à l'axe le long duquel s'étendent les bras, notamment une direction verticale lorsque la tête de support 20 est en position d'utilisation. La direction selon laquelle s'étendent les encoches 36a, 36b coïncide avec celle de l'axe du canal lorsque le tube est en position d'utilisation.

Les encoches 36a, 36b s'étendent depuis la surface supérieure 30 jusqu'à la surface inférieure de la tête de support 20. Chaque encoche 36a, 36b présente, selon la direction verticale lorsque la tête de support est en position d'utilisation, une extrémité d'entrée évasée 38. Cette extrémité évasée 38 est notamment constituée par deux chanfreins, ménagés à l'extrémité supérieure selon la direction verticale de portions de la surface interne 32 délimitant les encoches 36a, 36b.

Les encoches 36a, 36b forment des moyens de contrôle de l'orientation angulaire du tube 12 selon un axe de celui-ci correspondant à l'axe du canal lorsque la tête et le tube sont en position d'utilisation, ces encoches étant aptes à coopérer avec le tube d'une manière qui sera décrite ci-après.

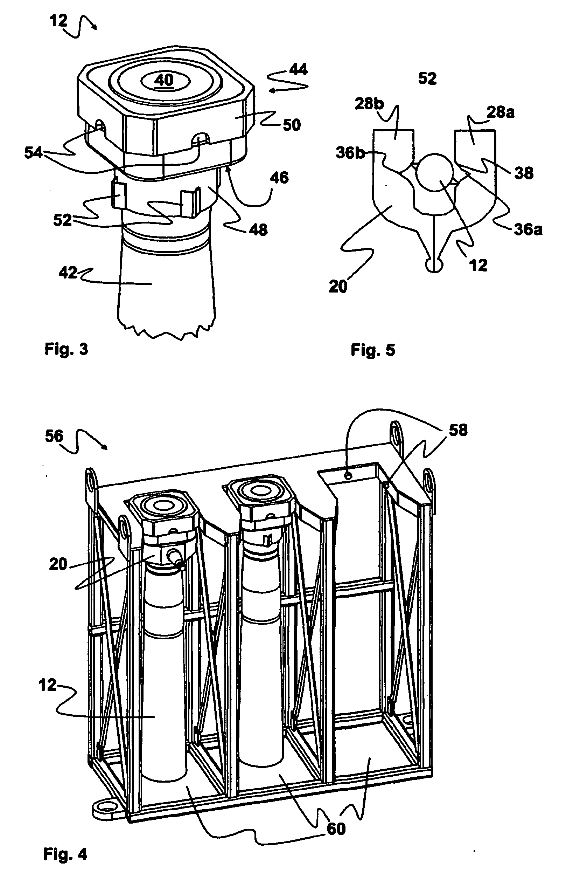

On va maintenant décrire le tube de poche 12 en référence essentiellement à la figure 3. La figure 3 représente notamment une extrémité supérieure du tube lorsque celui-ci est dans sa position d'utilisation.

Le tube 12 comprend un corps de tube 42 réalisé en un matériau réfractaire, et à son extrémité supérieure, une tête 14 de section transversale carrée. La section de la tête est de forme distincte d'une section transversale du corps de tube 42 qui présente une section circulaire. En outre, la section carrée de la tête 44 est de plus grande dimension que la section circulaire du corps de tube 42 et, de ce fait, entre la tête 44 et le corps de tube 42, le tube de poche 12 comprend une surface de retour 46 essentiellement horizontale et tournée vers l'extrémité inférieure du tube lorsque le tube est dans sa position d'utilisation. Une telle surface de retour est destinée à coopérer avec une surface supérieure 30 de la tête de support 20 de façon à entrer en butée avec celle-ci lorsque le tube est dans sa position d'utilisation.

En outre, comme on le voit sur la figure 3, le tube comprend une enveloppe 48 réalisée en une seule pièce et disposée autour d'une portion d'extrémité du corps de tube. Cette enveloppe 48 est réalisée en un matériau métallique et notamment en acier et recouvre toute la tête 44 et une partie supérieure de la partie tubulaire du tube.

La portion de l'enveloppe métallique couvrant la portion tubulaire du tube comprend quatre reliefs ou ailettes 52. Chaque ailette s'étend essentiellement selon l'axe du canal, c'est-à-dire l'axe vertical lorsque le tube est en position d'utilisation, et possède une section transversale invariante, notamment de forme triangulaire. Les ailettes sont identiques, réparties uniformément sur une circonférence du tube et sont notamment espacées de 90°.

Deux ailettes 52 opposées du tube 12 sont aptes à coopérer avec les encoches 36a, 36b de la tête de support 20 et sont de forme complémentaire de ces encoches. Ces ailettes forment donc des moyens de contrôle de l'orientation du tube par rapport à la tête de support 20, l'orientation étant mesurée relativement à l'axe du canal 40 du tube 12.

Comme le tube comprend quatre ailettes 52 réparties uniformément, il peut être placé dans la tête de support 20 selon plusieurs orientations. En effet, les ailettes étant identiques, chaque ailette 52 peut coopérer indifféremment avec l'une ou l'autre des encoches 36a, 36b. Cela permet d'introduire le tube dans l'installation selon différentes orientations.

Comme on le voit sur la figure 3, l'enveloppe est également conformée pour comprendre une portion annulaire formant une ceinture 50 d'épaisseur plus importante que le reste de l'enveloppe. La ceinture 50 de l'enveloppe métallique est ménagée dans la portion dans laquelle cette enveloppe recouvre la tête 44. L'épaisseur de la ceinture est supérieure à 10 millimètres, de préférence 14 millimètres, alors que le reste de l'enveloppe est d'épaisseur comprise entre 2 et 7 millimètres, de préférence entre 4 et 6 millimètres.

Le tube comprend également des encoches 54 conformées dans la ceinture 50 de l'enveloppe, notamment en partie inférieure de celle-ci. Les encoches 54 sont ménagées chacune sur un côté de la tête 44, au milieu de chaque côté de celle-ci. Elles sont notamment disposées au-dessus de chaque ailette 52. Les encoches 54 permettent notamment de maintenir la tête 44 du tube dans un dispositif de stockage 56 qui sera décrit brièvement ci-après. Comme ces encoches sont au nombre de quatre et réparties uniformément sur le tube, le tube peut également être placé selon différentes orientations dans le dispositif de stockage.

Le tube 12 et le dispositif de manipulation 10 ne sont pas limités à ce qui a été décrit plus haut.

En effet, la tête de support 20 pourrait consister non pas en une fourche mais en une pince comprenant deux bras mobiles l'un par rapport à l'autre, aptes à conférer à la tête de support 20 une pluralité de configurations. Une telle pince permet notamment de minimiser les jeux entre le tube 12 et la tête de support 20, notamment entre les ailettes 52 et les encoches 36a, 36b, une fois le tube 12 mis en place dans la tête de support 20.

En outre, on peut également envisager que la surface supérieure de la tête 20 ne coopère pas avec la surface de retour du tube. Dans ce cas, l'encoche 36a, 36b pourrait par exemple comprendre un fond, à son extrémité (selon la direction verticale lorsque la tête est en position d'utilisation) opposée à l'extrémité d'entrée. Ce fond permettrait de retenir les ailettes 52 dans les encoches selon l'axe vertical lorsque la tête et le tube sont en position d'utilisation.

De plus, la forme des moyens de contrôle de l'orientation du tube et/ou de la tête de support peut être différente de ce qui a été décrit, tant que ces moyens coopèrent.

Les moyens de déplacement du dispositif de manipulation ne sont pas non plus limités à ceux décrits ci-dessus. Ils peuvent comprendre des liaisons supplémentaires ou moins de liaisons, des bras de déplacement supplémentaires ou un seul bras. En outre, les différentes liaisons ne sont pas obligatoirement des liaisons rotules, notamment les liaisons 24 et 26 peuvent être des liaisons pivots. On pourrait également envisager que les bras 16 et 18 soient remplacés par des vérins qui permettent d'allonger la longueur de ceux-ci.

En outre, le tube peut être dépourvu des encoches 54. La retenue sur le dispositif de stockage peut être effectuée d'une autre façon que celle décrite et le tube peut par exemple être simplement posé sur un fond d'un tel dispositif. Le tube pourrait également comprendre une tête de section transversale différente de celle décrite et/ou ne pas comprendre de surface de retour, dans le cas où la section du tube est constante sur toute sa dimension selon l'axe du canal.

De plus, l'élément saisi par la tête de support peut également être un élément de coulée comprenant un tube et un cadre. Dans ce cas, le tube pourrait être dépourvu de moyens de contrôle, ces moyens étant ménagés sur le cadre.

On va maintenant décrire un procédé de préhension du tube par la tête de support et de déplacement du tube dans l'installation de coulée à l'aide des figures 1, 4 et 5.

Comme on le voit sur les figures 1 et 4, avant que le tube ne soit saisi par la tête de support 20, il est disposé dans le dispositif de stockage 56 dans lequel il est suspendu à l'aide de pions 58 coopérant avec au moins deux encoches 54 opposées du tube. Le tube est ainsi suspendu dans le dispositif de stockage 56 par une extrémité d'entrée de celui-ci et se trouve stocké dans sa position d'utilisation.

Pour venir saisir le tube dans cette position, le procédé comprend une première étape lors de laquelle on approche la tête de support 20 d'une portion du tube située sous le niveau des moyens de contrôle du tube pour introduire le tube dans l'espace 29 défini entre les bras 28a, 28b de la tête 20. Pour que le dispositif de manipulation puisse venir entourer le tube, le dispositif de stockage comprend un côté 60 ouvert qui ménage un accès vers une face latérale du tube 12 lorsque celui-ci est dans sa position d'utilisation. La position du dispositif de manipulation après cette étape est représentée en pointillés à la figure 1.

Comme la portion du tube située sous le niveau des moyens de contrôle du tube est d'épaisseur moindre que la portion du tube munie de l'enveloppe comprenant ces moyens de contrôle, du fait de l'épaisseur de l'enveloppe, l'espace situé entre les bras 28a, 28b est dimensionné pour accueillir cette portion du tube.

Ensuite, lorsque la tête de support 20 est placée dans la position représentée en pointillés sur la figure 1, on déplace celle-ci vers le haut de sorte que les moyens de contrôle du tube coopèrent avec les moyens de la tête, ici que les ailettes 52, notamment les deux ailettes situées sous les encoches 54 par lesquelles le tube est suspendu, coopèrent avec les encoches 36a, 36b du tube. Pour faciliter la mise en place du tube dans la tête de support 20, les ailettes 52 coopèrent tout d'abord avec l'entrée évasée 38 de la tête de support, comme on le voit sur la figure 5. Du fait de sa conformation, cette entrée 38 guide l'ailette 52 vers l'encoche correspondante, respectivement 36a, 36b.

Une fois cette étape effectuée, les ailettes 52 sont logées dans les encoches 36a, 36b. La tête de support est encore déplacée vers le haut jusqu'à ce que la surface supérieure 30 de celle-ci coopère avec la surface de retour 46 du tube. La tête de support est alors placée sur le tube comme cela est représenté à la figure 4.

Le tube 12 est alors complètement retenu dans la tête de support 20. En effet, les encoches 36a, 36b empêchent toute rotation du tube et toute translation de celui-ci dans le plan horizontal. En outre, la coopération de la surface de retour 46 avec la surface supérieure 30 de la tête de support 20 empêche le tube 12 d'effectuer une translation verticale vers le bas. Le seul mouvement que le tube pourrait effectuer est une translation verticale vers le haut, celle-ci étant bloquée par la gravité terrestre lorsque le tube est dans sa position d'utilisation. Ainsi, les moyens de contrôle de l'orientation angulaire du tube forment également des moyens de retenue de celui-ci sur la tête de support.

Ainsi, le tube étant retenu sur la tête de support 20, on déplace encore le tube 12 vers le haut, de façon à désolidariser les encoches 54 des pions 58. Les encoches 54 ne sont pas conformées pour bloquer le mouvement vers le haut du tube et celui-ci peut donc être désolidarisé du dispositif de stockage 56. Le tube étant libre relativement au dispositif de stockage 56, on peut déplacer celui-ci à l'aide de bras 16 et 18 pour l'amener dans installation de coulée.

Ce procédé relativement simple permet de contrôler l'orientation dans laquelle le tube est amené dans l'installation de coulée et peut également être complètement automatisé.

On notera que le procédé n'est pas limité à ce qui a été décrit ci-dessus. Par exemple, si la tête de support comprend une pince, le procédé comprend une étape supplémentaire de fermeture de la pince une fois que les encoches de la tête de support et les ailettes du tube sont mis en place les unes par rapport aux autres et que la surface de retour du tube et la surface supérieure de la tête entrent en butée. Cette étape est effectuée avant que le tube soit désolidarisé du dispositif de stockage.

## Revendications

1. Tête de support (20) apte à supporter un tube de poche (12) pour coulée de métal liquide comprenant un canal (40) pour le passage du métal s'étendant essentiellement selon un axe, la tête de support (20) étant prévue pour un dispositif de manipulation (10) du tube et étant **caractérisé en ce qu'**elle comprend des moyens de contrôle de l'orientation angulaire du tube par rapport à la tête (20), selon un axe correspondant à l'axe du canal.

2. Tête de support (20) selon la revendication précédente, comprenant deux bras (28a, 28b) sur lesquels sont agencés les moyens de contrôle.

3. Tête de support (20) selon la revendication précédente, conformée pour que les deux bras (28a, 28b) confèrent à la tête une unique configuration.

4. Tête de support selon la revendication 2, dans laquelle les bras forment les bras articulés d'une pince et sont aptes à conférer à la tête une pluralité de configurations.

5. Tête de support (20) selon l'une quelconque des revendications précédentes, dans laquelle les moyens de contrôle forment des moyens de retenue du tube (12) sur la tête (20).

6. Tête de support (20) selon l'une quelconque des revendications précédentes, dans laquelle les moyens de contrôle comprennent au moins une encoche (36a, 36b) conformée pour s'étendre selon l'axe du tube (12) lorsque celui-ci est rapporté sur la tête (20), l'encoche étant apte à coopérer avec un relief du tube, de préférence, une pluralité d'ailettes (52), et présentant selon cette direction une extrémité d'entrée évasée (38).

7. Tête de support selon l'une quelconque des revendications précédentes, comprenant une surface de butée (30) de forme complémentaire d'une surface de retour (46) du tube (12), et apte à entrer en butée contre cette surface de retour.

8. Dispositif (10) de manipulation d'un tube de poche (12) pour coulée de métal liquide, le dispositif comprenant une tête de support (20) telle que définie dans l'une quelconque des revendications précédentes, et comprenant en outre des moyens de déplacement (16,18,22,24,26) de la tête, des moyens d'entraînement des moyens de déplacement et de préférence des moyens de commande des moyens d'entraînement.

9. Tube de poche (12) pour coulée de métal liquide comprenant un canal (40) pour le passage du métal s'étendant essentiellement selon un axe, **caractérisé en ce qu'**il comprend des moyens de contrôle de l'orientation angulaire du tube selon à un axe correspondant à l'axe du canal par rapport à une tête de support (20) selon l'une quelconque des revendications 1 à 7, ces moyens étant aptes à coopérer avec les moyens complémentaires (36a, 36b) de la tête, et de préférence ménagés sur une enveloppe métallique (48) du tube.

10. Tube (12) selon la revendication précédente, dans lequel les moyens de contrôle comprennent au moins un relief, par exemple au moins une ailette (52), s'étendant essentiellement selon l'axe du canal et ayant une section transversale invariante relativement à cette direction, ce relief étant apte à coopérer avec une encoche (36a,36b) appartenant à la tête selon la revendication 6.

11. Tube (12) selon l'une quelconque des revendications 9 et 10, comprenant une surface de retour (46) apte à entrer en butée avec une surface de butée (30) de forme complémentaire de la tête de support selon la revendication 7.

12. Tube (12) selon au moins l'une des revendications 9 à 11, dans lequel les moyens de contrôle comprennent au moins trois éléments de contrôle.

13. Ensemble d'un dispositif de manipulation (10) selon la revendication 8 et d'un tube de poche (12) selon l'une quelconque des revendications 9 à 12.

14. Procédé de préhension d'un tube de poche (12) selon l'une quelconque des revendications 9 à 12, **caractérisé en ce qu'**il comprend les étapes suivantes :
- on approche une tête de support (20) selon l'une quelconque des revendications 2 à 7 d'une portion du tube (12) située sous le niveau des moyens de contrôle (52) du tube lorsque celui-ci est dans sa position d'utilisation, de sorte que le tube (12) est introduit dans l'espace (29) défini entre les bras (28a, 28b) de la tête,
- on déplace la tête (20) vers le haut de sorte que les moyens de contrôle (52) du tube coopèrent avec ceux de la tête (20), de préférence jusqu'à ce que la surface de butée (30) de la tête soit en butée contre la surface de retour (46) du tube,
- de façon optionnelle, lorsque les bras de la tête forment les bras articulés d'une pince, ceux-ci ayant été approchés du tube avec la pince en configuration ouverte, on ferme la pince.

15. Procédé de mise en place d'un tube de poche selon l'une quelconque des revendications 9 à 12 dans une installation de coulée à l'aide d'un dispositif de manipulation (10) selon la revendication 8, **caractérisé en ce qu'**il comprend les étapes suivantes:
- on effectue les étapes du procédé de préhension selon la revendication précédente, et
- on déplace (20) la tête de support pour introduire le tube (12) dans l'installation de coulée.

16. Procédé de mise en place d'un tube de poche selon la revendication 15, dans lequel le tube de poche (12) a déjà été utilisé dans une première orientation angulaire par rapport à son axe (40) et dans lequel, dans la première étape du procédé de préhension, la tête de support (20) est approchée d'une portion du tube (12) de telle sorte que la préhension du tube soit réalisée avec une orientation angulaire du tube (12) selon son axe (40), différente de la première orientation.

## Claims

1. Support head (20) capable of supporting a ladle shroud (12) for casting liquid metal, comprising a canal (40) along which the metal can pass, extending essentially along an axis, the support head (20) being designed for a tube handling device (10) and being **characterized in that** it comprises control means for controlling the angular orientation of the shroud with respect to the head (20), about an axis corresponding to the axis of the canal.

2. Support head (20) according to the preceding claim, comprising two arms (28a, 28b) on which the control means are arranged.

3. Support head (20) according to the preceding claim, configured so that the two arms (28a, 28b) give the head a single configuration.

4. Support head according to claim 2, in which the arms form :he articulated arms of a gripper and are capable of giving the head a plurality of configurations.

5. Support head (20) according to any one of the preceding claims, in which the control means form retaining means for holding the shroud (12) on the head (20).

6. Support head (20) according to any one of the preceding claims, in which the control means comprise at least one notch (36a, 36b) configured to extend along the axis of the shroud (12) when the shroud is attached to the head (20), the notch being capable of collaborating with a relief belonging to the shroud, preferably a plurality of fins (52), and having a flared entrance end (38) in this direction.

7. Support head according to any one of the preceding claims, comprising an abutment surface (30) of a shape that compliments that of a return surface (46) of the shroud (12), and which is capable of coming into abutment against this return surface.

8. Device (10) for handling a ladle shroud (12) for casting liquid metal, the device comprising a support head (20) as defined in any one of the preceding claims, and further comprising movement means (16, 18, 22, 24, 26) for moving the head, drive means for driving the movement means and, preferably, operating means for operating the drive means.

9. Ladle shroud (12) for casting liquid metal comprising a canal (40) along which the metal can pass, extending essentially along an axis, **characterized in that** it comprises control means for controlling the angular orientation of the shroud about an axis corresponding to the axis of the canal with respect to a support head (20) according to any one of claims 1 to 7, these means being capable of collaborating with the complementary means (36a, 36b) belonging to the head, and preferably formed on a metal jacket (48) of the shroud.

10. Shroud (12) according to the preceding claim, in which the control means comprise at least one relief, for example at least one fin (52), extending essentially along the axis of the canal and having a cross section that is invariable relative to this direction, this relief being capable of collaborating with a notch (36a, 36b) belonging to the head according to claim 6.

11. Shroud (12) according to either one of claims 9 and 10, comprising a return surface (46) capable of coming into abutment with an abutment surface (30) of complementary shape belonging to the support head according to claim 7.

12. Shroud (12) according to at least one of claims 9 to 11, in which the control means comprise at least three control elements.

13. Assembly of a handling device (10) according to claim 8 and of a ladle shroud (12) according to any one of claims 9 to 12.

14. Method of grasping a ladle shroud (12) according to any one of claims 9 to 12, **characterized in that** it comprises the following steps:
- a support head (20) according to any one of claims 2 to 7 is brought closer to a portion of the shroud (12) situated below the level of the control means (52) of the shroud when this shroud is in its position of use, so that the shroud (12) is introduced into the space (29) defined between the arms (28a, 28b) of the head,
- the head (20) is moved upwards so that the control means (52) of the shroud collaborate with those of the head (20), preferably until the abutment surface (30) of the head is in abutment with the return surface (46) of the shroud,
- optionally, when the arms of the head form the articulated arms of a gripper, these arms having been brought closer to the shroud with the gripper in the open configuration, the gripper is closed.

15. Method of installing a ladle shroud according to any one of claims 9 to 12 in a casting installation using a handling device (10) according to claim 8, **characterized in that** it comprises the following steps:
- the steps of the grasping method according to the preceding claim are carried out, and
- the support head (20) is moved in order to introduce the shroud (12) into the casting installation.

16. Method of installing a ladle shroud according to claim 15, in which the ladle shroud (12) has already been used in a first angular orientation with respect to its axis (40), and in which, in the first step of the grasping method, the support head (20) s brought closer to a portion of the shroud (12) in such a way that the shroud is grasped with the shroud (12) in an angular orientation about its axis (40) which differs from the first orientation.

## Patentansprüche

1. Lagerkopf (20), der zum Stützen eines Gießpfannenrohres (12) für Flüssigmetallschmelzen geeignet ist, das einen Kanal (40) für den Durchfluss des Metalls, der sich im Wesentlichen entlang einer Achse erstreckt, umfasst, wobei der Lagerkopf (20) für eine Vorrichtung zur Handhabung (10) des Rohres vorgesehen ist, **dadurch gekennzeichnet, dass** er Kontrollmittel für die Winkelausrichtung des Rohres relativ zum Kopf (20) um eine der Achse des Kanals entsprechende Achse umfasst.

2. Lagerkopf (20) nach dem vorhergehenden Anspruch, der zwei Arme (28a, 28b), auf denen die Kontrollmittel angebracht sind, umfasst.

3. Lagerkopf (20) nach dem vorhergehenden Anspruch, der so angepasst ist, dass die zwei Arme (28a, 28b) dem Kopf eine einzige Konfiguration verleihen.

4. Lagerkopf nach Anspruch 2, dessen Arme die Gelenkarme einer Klemme bilden und geeignet sind, dem Kopf eine Vielzahl an Konfigurationen zu verleihen.

5. Lagerkopf (20) nach einem beliebigen vorhergehenden Anspruch, bei dem die Kontrollmittel Rückhalteelemente für das Rohr (12) auf dem Kopf (20) bilden.

6. Lagerkopf (20) nach einem beliebigen vorhergehenden Anspruch, bei dem die Kontrollmittel mindestens eine Einkerbung (36a, 36b) umfassen, die so ausgeführt ist, dass sie sich entlang der Achse des Rohres (12) erstreckt, wenn es auf den Kopf (20) aufgesetzt wird, wobei die Einkerbung für ein Zusammenwirken mit einer Erhöhung am Rohr, vorzugsweise mit mehreren Nasen (52), geeignet ist und in dieser Richtung ein Ende mit abgeschrägter Einführungsöffnung (38) aufweist.

7. Lagerkopf nach einem beliebigen vorhergehenden Anspruch, der eine Anschlagfläche (30) in komplementärer Form zu einer Rückhaltefläche (46) des Rohres (12) umfasst und geeignet ist, an dieser Rückhaltefläche anzuschlagen.

8. Vorrichtung (10) zur Handhabung eines Gießpfannenrohres (12) für Flüssigmetallschmelzen, die einen Lagerkopf (20) gemäß einem beliebigen der vorhergehenden Ansprüche umfasst, sowie zusätzlich zu Bewegungsmittel (16, 18, 22, 24, 26) des Kopfes Mittel zum Antrieb der Bewegungsmittel und vorzugsweise Bedienmittel für die Antriebsmittel umfasst.

9. Gießpfannenrohr (12) für Flüssigmetallschmelzen, das einen Kanal (40) für den Durchfluss des Metalls enthält, der sich im Wesentlichen entlang einer Achse erstreckt, **dadurch gekennzeichnet, dass** es Kontrollmittel für die Winkelausrichtung des Rohres um eine, der Achse des Kanals entsprechenden Achse relativ zu einem Lagerkopf (20) nach einem der Ansprüche 1 bis 7 umfasst, wobei diese Mittel für ein Zusammenwirken mit komplementären Mitteln (36a, 36b) des Lagerkopfes geeignet und vorzugsweise auf einem Metallgehäuse (48) des Rohres angebracht sind.

10. Rohr (12) nach dem vorhergehenden Anspruch, bei dem die Kontrollmittel mindestens eine Erhöhung umfassen, zum Beispiel mindestens eine Nase (52), die sich im Wesentlichen entlang der Achse des Kanals erstreckt und in dieser Richtung einen unveränderlichen Quersehnitt hat, wobei diese Erhöhung für ein Zusammenwirken mit einer Einkerbung (36a, 36b) am Lagerkopfnach Anspruch 6 geeignet ist.

11. Rohr (12) nach einem der Ansprüche 9 und 10, das eine Rückhaltefläche (46) umfasst, die geeignet ist, mit einer, in ihrer Form komplementären Anschlagfläche (30) des Lagerkopfes nach Anspruch 7 in Anlage zu treten.

12. Rohr (12) nach mindestens einem der Ansprüche 9 bis 11, bei dem die Kontrollmittel mindestens drei Kontrollelemente enthalten.

13. Anordnung einer Handhabungsvorrichtung (10) nach Anspruch 8 und einem Gießpfannenrohr (12) nach einem der Ansprüche 9 bis 12.

14. Verfahren zum Greifen eines Gießpfannenrohres (12) nach einem der Ansprüche 9 bis 12, **dadurch gekennzeichnet, dass** es folgende Schritte umfasst:
- ein Lagerkopf (20) nach einem der Ansprüche 2 bis 7 wird an einen Abschnitt des Rohres (12) unterhalb der Kontrollmittel (52) des Rohres herangeführt, während sich das Rohr in Betriebsstellung befindet, sodass das Rohr (12) in den Zwischenraum (29) zwischen den Armen (28a, 28b) des Kopfes eingeführt wird,
- der Kopf (20) wird so nach oben bewegt, dass die Kontrollmittel (52) des Rohres mit denen des Kopfes (20) zusammenwirken, vorzugsweise bis sich die Anschlagfläche (30) des Kopfes mit der Rückhaltefläche (46) des Rohres in Anschlagstellung befindet,
- optional wird die Klemme geschlossen, wenn die Arme des Kopfes die Gelenkarme einer Klemme bilden, wobei diese mit der Klemme in geöffneter Konfiguration an das Rohr herangeführt wurden.

15. Verfahren zum Instellungbringen eines Gießpfannenrohres nach einem der Ansprüche 9 bis 12 in einer Gussanlage mithilfe einer Handhabungsvorrichtung (10) nach Anspruch 8, **dadurch gekennzeichnet, dass** es folgende Schritte unfasst:
- die Schritte des Greifverfahrens werden nach dem vorhergehenden Anspruch durchgeführt und
- der Lagerkopf (20) wird bewegt, um das Rohr (12) in die Gussanlage einzuführen.

16. Verfahren zum Instellungbringen eines Gießpfannenrohres nach Anspruch 15, bei dem das Gießpfannenrohr (12) bereits in einer ersten Winkelausrichtung relativ zu seiner Achse (40) verwendet wurde und bei dem, im ersten Schritt eines Greifverfahrens, der Lagerkopf (20) so an einen Abschnitt des Rohres (12) herangeführt wird, dass das Greifen des Rohres mit einer Winkclausrichtung des Rohres (12) relativ zu seiner Achse (40) durchgeführt wird, wobei sich diese Ausrichtung von der ersten unterscheidet.
